# EUROPEAN PATENT SPECIFICATION

(11) **EP 2 194 620 B1**
(45) Date of publication and mention of the grant of the patent: **09.03.2016**
(21) Application number: 09014861.0
(22) Date of filing: 01.12.2009
(51) Int. Cl.: H01S 3/067

(54) **Amplifying optical fibre and production method**
Verstärkerglasfaser und Herstellungsverfahren
Fibre optique amplificatrice et procédé de production

(30) Priority: 02.12.2008 FR 0806752; 04.12.2008 US 119970 P
(43) Date of publication of application: 09.06.2010
(73) Proprietor: Draka Comteq B.V., 1083 HJ Amsterdam (NL)
(72) Inventor: Pastouret, Alain, 91300 Massy (FR); Gonnet, Cédric, 75014 Paris (FR); Burov, Ekaterina, 92100 Boulogne-Billancourt (FR)
(74) Representative: Algemeen Octrooi- en Merkenbureau B.V.

(56) References cited:
- EP-A- 1 347 545
- EP-A1- 2 187 486
- WO-A-03/058776
- WO-A-03/079070
- WO-A-2007/020362
- J. KOPONEN, W. WILLSON, M. SÖDERLUND, S. TAMMELA, H. PO, P. STENIUS, P. KIIVERI, M. HOTOLEANU, V. PHILIPPOV: "Photodarkening: Understanding and Mitigating" LIEKKI WHITE PAPER, 31 March 2005 (2005-03-31), XP002518512
- PATRA A: "Study of photoluminescence properties of Er<3+> ions in SiO2-GeO2 and Al2O3 nanoparticles" SOLID STATE COMMUNICATIONS, OXFORD, vol. 132, no. 5, 1 November 2004 (2004-11-01), pages 299-303, XP004561702 ISSN: 0038-1098
- ZHANG DAN ET AL: "Optical gain at 1535nm in LaF3:Er,Yb nanoparticle-doped organic-inorganic hybrid material waveguide" APPLIED PHYSICS LETTERS, AIP, AMERICAN INSTITUTE OF PHYSICS, MELVILLE, NY, vol. 91, no. 16, 17 October 2007 (2007-10-17), pages 161109-161109, XP012099700 ISSN: 0003-6951
- WU Y C ET AL: "Optical and fluorescent properties of Y2O3 sol-gel planar waveguides containing Tb3+ doped nanocrystals" APPLIED PHYSICS A; MATERIALS SCIENCE & PROCESSING, SPRINGER, BERLIN, DE, vol. 87, no. 4, 16 March 2007 (2007-03-16), pages 697-704, XP019515412 ISSN: 1432-0630
- LOPEZ-LUKE T ET AL: "Effect of the CTAB concentration on the upconversion emission of ZrO2:Er<3+> nanocrystals" OPTICAL MATERIALS, ELSEVIER SCIENCE PUBLISHERS B.V. AMSTERDAM, NL, vol. 29, no. 1, 1 October 2006 (2006-10-01), pages 31-37, XP025111531 ISSN: 0925-3467 [retrieved on 2006-10-01]
- DEKKER R ET AL: "Stimulated emission and optical gain in LaF3:Nd nanoparticle-doped polymer-based waveguides" APPLIED PHYSICS LETTERS, AIP, AMERICAN INSTITUTE OF PHYSICS, MELVILLE, NY, vol. 85, no. 25, 1 January 2004 (2004-01-01), pages 6104-6106, XP012063862 ISSN: 0003-6951

## Description

The present invention relates to the field of optical fibres and more specifically the use of at least one portion of an optical fibre in a laser wherein the optical fibre is suitable for transmitting and amplifying an optical signal. The amplifying fibres can be used in particular as high speed transmission line amplifiers or as lasers. The invention also relates to a method for producing such a fibre.

EP 2 187 486 relates to an amplifying optical fibre having a central core and an optical cladding surrounding the central core, wherein the central core is based on a silica matrix comprising nanoparticles, which nanoparticles are composed of a matrix material comprising doping ions of at least one rare earth element, wherein the concentration of the doping ions is between about 0.01 wt. % and about 1 wt. % of the total weight of the central core and wherein the average distance between the doping ions is at least 0.4 nanometers.

Amplifying fibres and in particular fibres doped with rare earth elements are commonly used for numerous optical applications.

For example, Erbium doping is used in long-distance optical telecommunication systems for amplifying optical signals transmitted. Such fibres are used in EDFAs or "Erbium Doped Fiber Amplifier" and have a central core composed of a silica matrix comprising doping elements such as Erbium at concentrations of the order of 250 to 1000 ppm (0.025 to 0.1 wt%) optionally combined with complementary doping elements making it possible to improve amplification, such as for example alumina for broadening the gain bandwidth for WDM (Wavelength Dense Multiplexing) applications.

Ytterbium doping is often used in fibres for powerful laser applications. The Ytterbium concentrations in the fibres are then very high (several wt.%). Ytterbium can also be used in the EDFA fibres to improve the effectiveness of absorption of the pump signal by the Erbium.

In a manner known per se, optical amplification in a rare earth doped fibre operates by injecting into the fibre a pump signal which excites the rare earth ions (for example Er³⁺ in EDFA). When a light signal passes through this portion of optical fibre, it de-energizes the ions by stimulated emission by producing a photon identical in all respects to the incident photon. The light signal has therefore been doubled. A portion of such a fibre in combination with a resonant cavity constituted by a system of mirrors or Bragg gratings forms a fibre laser the wavelength and power of which depend on the rare earth element used and its concentration.

For certain applications, it is desirable to obtain high powers at the amplifying fibre output. It is also sought increasingly to reduce the size of optical systems; research is therefore being carried out into compact fibres. In this case, it is necessary to increase the concentration of rare earth dopants in the fibre core in order to increase the amplification gain. Now, when the concentration of rare earth dopants in the fibre core is significant, the formation of packets of ions in the silica matrix of the core is observed. These packets create doping inhomogeneities which impair the effectiveness of the emission of each rare earth ion. This results in a limitation of the amplification gain due to the existence of certain concurrent deenergizing paths between adjacent ions, such as for example transfers of energy by cross reactions. Such ion clusters also accentuate the photon degradations which can occur in the core of the high-power fibre during the propagation of light signals in the fibre. In fact, the crystalline defects present in the silica matrix of the core can absorb the energy from the photons emitted by rare earth ions which are deenergized, and create darkening points in the fibre core which give rise to additional losses. This method is all the more encouraged when the defects in the silica network are close to the rare earth ions and these ions are present in the form of clusters.

The publication of J. Koponen et al. "Liekki White Paper Photodarkening: Understanding and Mitigating", 29-31 March 2005, identifies the problem of the photo-darkening of rare-earth-doped optical fibres. This publication correlates the problem of photo-darkening with the formation of rare earth ion clusters in the core and proposes to limit the inhomogeneities by using a method of production by direct deposition of nanoparticles (NPs) by a so-called Direct Nanoparticle Deposition (DND) method.

The production method described in this publication is an alternative to MCVD: (Modified Chemical Vapour Deposition) often used for doping the core of a fibre. The authors of this publication propose a production method based on an Outside Vapour Deposition (OVD) technique according to which the formation of the silica and the doping are carried out simultaneously. Nanoparticles composed of a rare-earth-doped silica powder, optionally co-doped with other elements, are formed when the reagents are simultaneously injected into the flame of a torch then directly projected in order to form a rod of doped silica constituting the fibre core. Such a production method does not however make it possible to preserve a structure of nanoparticles in the fibre core; these nanoparticles are simply particles of doped silica such as those obtained in a vapour deposition method before being fused at high temperature in order to form the layers of glass which provide the primary preform. The authors of this publication observed that this outside vapour deposition technique made it possible to obtain a better homogeneity of the rare earth dopants in the fibre core compared with an MCVD impregnation technique.

However, the rare earth ions can still be found close to crystal defects in the silica matrix of the fibre core. Moreover, the appearance of darkening points in the fibre core is not completely avoided when the fibre is used to transmit high-power optical signals and has a high concentration of rare earth dopants.

It is known to introduce the rare earth dopants into the fibre core by incorporating nanoparticles doped with rare earth elements by MCVD. For example, the documents EP-A-1 347 545 or WO-A-2007/020362 describe optical fibres comprising nanoparticles in the fibre core. The nanoparticles described in these documents include a rare earth doping element and at least one element improving the amplification of the signal, such as aluminum, lanthanum, antimony, bismuth etc. However the characteristics of the nanoparticles (design, composition, size, concentration) and of the doping described in these documents do not guarantee the reduction or elimination of photo-darkening in the fibre core for high concentrations of rare earth ions.

There is therefore a need for an amplifying optical fibre highly doped with rare earth elements and which allows the use of high optical powers without damaging the fibre.

For this purpose, the invention proposes incorporating the rare earth dopants at a high concentration in the core in the form of nanoparticles comprising at least one rare earth element and a matrix, the chemical composition and structure of which are chosen such that it ensures the absence of clusters (or pairs) of rare earth ions, the absence of interaction with the rare earth ions and the integrity of the nanoparticle during the production of the fibre by MCVD in order to form a barrier between the rare earth ions and the defects in the silica matrix.

Thus, it is possible to obtain an optical fibre according to the invention, in which the rare earth ions are incorporated at a high concentration in a homogeneous matrix, whilst being isolated from the defects in the silica matrix of the fibre core. The phenomenon of photo-darkening which damages the amplifying fibres used with high powers is thus avoided and the efficiency of the amplification of the optical signal is maximized.

The invention thus relates to the use of at least one portion of an optical fibre (150) in a laser, the optical power of the laser being greater than or equal to 10 W for a pulse of 100 ns, wherein said optical fibre (150) comprises a central core (10) suitable for transmitting and amplifying an optical signal, and an optical cladding (11) surrounding the central core and suitable for confining the optical signal transmitted in the core, the central core (10) being formed by a main matrix and containing nanoparticles (5) doped with a rare earth, characterized in that the concentration by weight of the rare earth dopants in each nanoparticle is comprised between 1 and 20% by weight (wt.%), and in that the concentration of the nanoparticles in the main matrix of the central core is comprised between 0.05% and 1% by volume

According to an embodiment, the concentration of the nanoparticles in the main matrix of the central core is greater than 10¹⁷ NPs/cm³, for nanoparticles 5 nm in diameter, and greater than 10¹⁶ NPs/cm³, for nanoparticles 10 nm in diameter.

According to the embodiments, the nanoparticle matrix can be based on alumina (Al₂O₃); it can comprise phosphorus (P); the main matrix of the central core can be based on silica; the rare earth element can be chosen from Erbium (Er), Ytterbium (Yb), Thulium (Tm) or a combination thereof.

The invention thus applies to a laser comprising at least one portion of an optical fibre according to the invention, the optical power of the laser being greater than or equal to 10 W for a pulse of 100 ns.

The invention also applies to the use of at least one portion of an optical fibre in an optical amplifier, the amplifier gain being greater than or equal to 20 dB for a length of fibre comprised between 1 m and 3 m.

A method for the production of an optical fibre primary preform comprising a central core suitable for transmitting and amplifying an optical signal, and an optical cladding surrounding the central core and suitable for confining the optical signal transmitted in the core, comprises the steps involving:
- chemically synthesizing rare-earth-doped nanoparticles, the concentration by weight of the rare earth dopants in each nanoparticle being comprised between 1 and 20% by weight;
- dispersing the nanoparticles in an aqueous solution with a concentration comprised between 0.05% and 1% by volume, preferably between 0.05% and 0.2% by volume;
- impregnating a porous layer inside a silica tube with said solution in order to form the core of a primary preform.

According to an embodiment, the nanoparticles are dispersed in the aqueous solution at a concentration greater than or equal to 10¹⁷ NPs/cm³, for nanoparticles 5 nm in diameter, and greater than 10¹⁶ NPs/cm³, for nanoparticles 10 nm in diameter.

According to an embodiment, the method moreover comprises a step which involves carrying out a heat treatment of the impregnated porous layer at a temperature above 1000 °C for at least 1 hour.

According to an embodiment, the step of synthesis of the nanoparticles is carried out with a molar ratio of precursors of alumina salts to precursors of rare earth salts comprised between 10 and 300.

Other characteristics and advantages of the invention will become apparent on reading the following description of the embodiments of the invention, given by way of example and with reference to the attached drawings, in which:
- Figure 1 diagrammatically illustrates a amplifying fibre according to the invention;
- Figure 2 diagrammatically illustrates steps of a method for producing an optical fibre preform according to the invention.

An optical fibre is conventionally composed of an optical core, having the function of transmitting and optionally amplifying an optical signal, and an optical cladding, having the function of confining the optical signal in the core. For this purpose, the refractive indices of the core nc and of the cladding ng are such that n_{c}>n_{g}. The term "optical cladding"is understood in contrast to the outer cladding constituted by the surface of the primary preform of the fibre. Typically, the central core and the optical cladding are obtained by gas phase deposition (CVD, OVD, VAD, etc). In the case of a CVD type method, the outer cladding is constituted by the deposition tube and optionally by refilling or sleeving. In general, the relatively less volatile elements (rare earths, aluminum, etc) are incorporated by impregnation of a porous silica rod during a CVD operation in order to form the core of the primary preform.

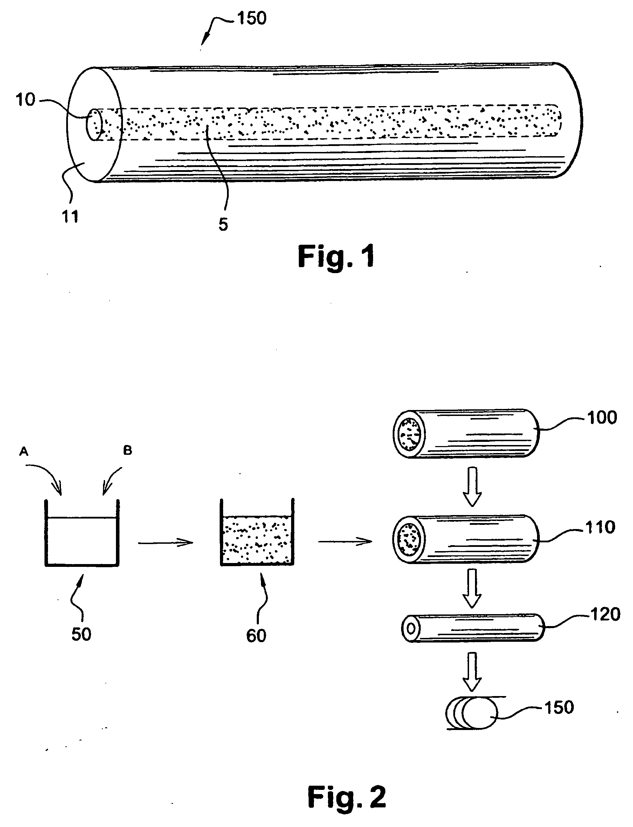

Figure 1 diagrammatically shows a fibre according to the invention.

The fibre 150 of the invention comprises a central core 10 suitable for transmitting and amplifying an optical signal and an optical cladding 11 surrounding the central core and suitable for confining the optical signal transmitted in the core. The core 10 is formed by a main matrix, generally of silica. The main matrix of the core can be pure silica, but more generally silica doped with Germanium, Phosphorus, Aluminum, or also a combination of these elements, in order to ensure the step index necessary for guiding the optical signal in the core. The cladding 11 can be pure or doped silica.

The core 10 of the fibre according to the invention contains nanoparticles 5 doped with rare earth ions and formed by a matrix with a composition and structure encouraging the solubilization of the rare earth ions and resistant to the conditions of production of the fibre. This matrix can be separate from the main matrix of the core of the preform.

The chemical composition and structure of the matrix of nanoparticles are chosen so as to ensure:
a) the absence of clusters (or pairs) of rare earth ions;
b) the absence of interaction between the rare earth ions and the nanoparticle matrix (defect, absorption, etc.)
c) the integrity of the nanoparticle during the production of the fibre by MCVD in order to form a barrier between the rare earth ions and the defects in the silica matrix of the fibre core.

In order to avoid the formation of ion clusters, the distance between two rare earth ions must be greater than the distance from the nearest rare earth neighbours (approximately 0.4 nm i.e. a rare earth concentration of less than 10²² ions/cm³ assuming a homogeneous distribution of the rare earth).

The concentration by weight of the rare earth dopants in each nanoparticle is thus comprised between 1 and 20 wt% (0.2 to 5 atom%) according to the intended applications and the choice of rare earth element. The concentration of the nanoparticles 5 in the main matrix of the core 10 is comprised between 0.05% and 1% by volume, and preferably between 0.05% and 0.2% by volume. If the concentration of the nanoparticles is less than 0.05% by volume, the fibre cannot exhibit a sufficient level of amplification. If the concentration of the nanoparticles is greater than 1%, a loss of efficiency of the amplification is observed due to the formation of ion pairs or clusters. Moreover, too high a concentration of nanoparticles increases the optical losses by diffusion.

For example, the concentration of the nanoparticles 5 in the main matrix of the core 10 is greater than 10¹⁷ NPs/cm³, for nanoparticles approximately 5 nm in diameter, and greater than 10¹⁶ NPs/cm³, for nanoparticles approximately 10 nm in diameter. The nanoparticle matrix allows a high concentration of rare earth ions with a good dispersion. This makes it possible to obtain a highly doped amplifying fibre having a maximized amplification efficiency of the optical signal, while avoiding the formation of ion clusters and the appearance of darkening points at high power.

The method of synthesis of the nanoparticles must be chosen so that it does not lead to the formation of defects responsible for the appearance of darkening points at high power. Thus, it is preferable to use the methods of synthesis by soft chemistry which promote the formation of thermodynamically stable stoichiometric structures, compared with physical methods which are governed by kinetics and lead to structures formed out of equilibrium which favour the formation of network defects.

For a fibre of Er-doped silica type, in practice an energy transfer by cross reactions is observed (de-energization between adjacent ions) from 10¹⁹ atoms/cm³ (approximately 0.25 wt%). This relative low concentration starting from which this energy transfer is observed shows that the silica matrices are not favorable to the incorporation of rare earth elements. The composition of the nanoparticle matrix is therefore chosen in order to encourage the dispersion and the solubility of the rare earth ions in order to be able to incorporate rare earth ions at a high concentration without energy transfers between adjacent ions. For example, alumina is known to allow the incorporation of rare earth ions at a high concentration, of the order of several wt% of rare earth. The concentration of the dopants in each nanoparticle can therefore be very significant (10 times more than the limit observed in a silica matrix) whilst remaining well dispersed. For nanoparticles of a given size, the final concentration of rare earth ions in the fibre core is determined by the concentration of nanoparticles incorporated.

The rare earth elements used within the framework of the present invention can be Erbium, Ytterbium, Thulium, or a combination of the latter, or also any other rare earth element allowing amplification by optical pumping over a given spectral window.

The nanoparticle matrix can be alumina (Al₂O₃). Aluminum allows a good distribution of the rare earth dopants in the nanoparticle and makes it possible to broaden the amplification gain in the spectral window for WDM applications. The nanoparticle matrix can also be composed of an oxide other than alumina, provided that this matrix allows the dissolution of a high concentration of rare earth ions and makes it possible to maintain a physical barrier between the rare earth dopants and the crystal defects in the matrix of the fibre core. The nanoparticle matrix does not lead to defects which are detrimental to the efficiency of transmission as a function of the time of use.

The nanoparticle matrix can also contain Phosphorus, for example in the case of Er/Yb co-doping, in order to encourage the efficiency of absorption of Er by transfer of energy from Yb to Er.

Figure 2 illustrates an embodiment of an optical fibre according to the invention.

The nanoparticles are produced by chemical or physical synthesis. Chemical synthesis which encourages the formation of thermodynamically stable stoichiometric structures is preferred. A so-called "solgel" standard method can be used in order to chemically synthesize nanoparticles in an aqueous solution 50 at a controlled pH, by co-precipitation of precursors of alumina salts and rare earth salts. For example, inorganic salts such as nitrate or chloride can be used as precursors of alumina, and inorganic salts (nitrate or chloride) or inorganic salts such as acetyl acetonate or acetate can be used as precursors of erbium, ytterbium or thulium. The molar ratio of the precursors of alumina salts (A) and rare earth salts (B) is comprised between 10 and 300 in order to obtain a concentration by weight of the rare earth dopants in each nanoparticle which is comprised between 1 and 20 wt% according to the intended applications and the choice of the earth element.

The nanoparticles are then washed and dispersed in an aqueous or alcoholic solution 60 with a concentration of nanoparticles comprised between 0.05% and 1% by volume, and preferably between 0.05% and 0.2% by volume. For example, the nanoparticles are dispersed in the aqueous or alcoholic solution 60 with a concentration of nanoparticles greater than or equal to 10¹⁷ NPs/cm³, for nanoparticles 5 nm in diameter, and greater than or equal to 10¹⁶ NPs/cm³, for nanoparticles 10 nm in diameter.

A silica tube 100 having a porous core and cladding formed by a silica tube is moreover produced by MCVD. The solution 60 of nanoparticles in stable suspension is then used in order to impregnate 110 the porous core of the silica tube during an MCVD operation in order to form the doped core of the primary preform. The concentration by volume of the nanoparticles in suspension in solution 60 and the concentration by volume of the nanoparticles in the matrix of the fibre core are substantially the same since the solvent of solution 60 is almost completely eliminated during the production of the preform.

In order for the matrix of each nanoparticle to be preserved in the final fibre and to be able to constitute a physical barrier between the rare earth ions and the crystal defects of the silica matrix of the fibre core, it is important that it can resist the conditions (temperature and stress) during production of the fibre. Thus, for certain matrices, a step of thermal densification of the nanoparticles can be provided, after their incorporation in the core of the primary preform by impregnation. The tube can thus be subjected to heat treatment at a temperature above 1000 °C for at least 1 hour, in order to reinforce the structure of the nanoparticles in the core.

This is then followed by a vitrification and contraction operation 120 in order to obtain the primary preform, and finally a refilling operation in order to form a final preform which can be used in a fibre-drawing tower for drawing the optical fibre 150.

### Example 1: Production of an optical fibre for a pulsed laser.

The chemical synthesis of nanoparticles of Ytterbium-doped alumina is carried out. The size of the nanoparticles is approximately 5 nm. Precursors of alumina salts and of Ytterbium salts are co-precipitated in an aqueous solution at a controlled pH (final pH of 4). The molar ratio of the precursors of alumina salts and Ytterbium salts is approximately 20 in order to guarantee a good dispersion of the Ytterbium ions in the alumina matrix. It is thus possible to ensure a minimal distance between two Ytterbium ions in each nanoparticle in order to avoid the formation of clusters.

An aqueous solution of these nanoparticles is prepared with a concentration of approximately 8.10¹⁷ NPs/cm³. This solution is then used to impregnate the core of a rod of porous silica by an MCVD operation. A heat treatment at a temperature above 1000 °C for at least 1 hour is applied before the step of vitrification of the core, in order to reinforce the structure of the nanoparticles in the core. The primary preform is then subjected to vitrification and collapsing operations then refilling in order to form a final preform which can be used in a fibre-drawing tower to draw the optical fibre.

An fibre doped with Ytterbium at a concentration of 2 to 3% by weight of Ytterbium in the core is thus obtained, without formation of packets of ions nor appearance of darkening points when the fibre is used with high optical powers. Such an optical fibre can be used as a pulsed laser with an output optical power greater than or equal to 10 W for a pulse of 100 ns.

### Example 2: Production of an optical fibre for a compact amplifier.

The chemical synthesis of nanoparticles of Erbium-doped alumina is carried out. The size of the nanoparticles is approximately 10 nm. Precursors of alumina salts and of Erbium salts are co-precipitated in an aqueous solution with a controlled pH (final pH of 9). The molar ratio of the precursors of alumina salts and Erbium salts is approximately 200 in order to guarantee a good dispersion of the Erbium ions in the alumina matrix and to ensure a high concentration of aluminium close to each Erbium ion capable of broadening the Er gain band. A minimum distance between two Erbium ions can be ensured in each nanoparticle in order to avoid the formation of clusters.

An aqueous solution of these nanoparticles is prepared with a concentration of approximately 2.10¹⁷ NPs/cm³. This solution is then used to impregnate the core of a rod of porous silica by an MCVD operation. A heat treatment at a temperature above 1000 °C for at least 1 hour is applied before the stage of vitrification of the core, in order to reinforce the structure of the nanoparticles in the core. The primary preform is then subjected to vitrification and collapsing operations then refilling in order to form a final preform which can be used in a fibre-drawing tower in order to draw the optical fibre.

A fibre doped with Erbium at a concentration of 0.2% by weight of Erbium in the core is thus obtained, without formation of clusters of ions nor appearance of darkening points when the fibre is used with high optical powers. Such an optical fibre can be used in a compact amplifier with an output optical power greater than or equal to 20 dB for 2 to 3 metres of fibre in the optical transmission band C.

The two examples given above are not limited of the possible applications of the invention. In particular, an optical amplifier can be produced with nanoparticles having a matrix other than alumina and doped with rare earth elements other than erbium. The amplifying fibre gain will depend on the concentration and type of rare earth element used. Similarly, a laser can be produced with nanoparticles having a matrix other than alumina and doped with rare earth elements other than ytterbium. The power of the laser will depend on the concentration and type of rare earth element used.

## Claims

1. The use of at least one portion of an optical fibre (150) in a laser, the optical power of the pulsed laser being greater than or equal to 10 W for a pulse of 100 ns, wherein said optical fibre (150) comprises a central core (10) suitable for transmitting and amplifying an optical signal, and an optical cladding (11) surrounding the central core and suitable for confining the optical signal transmitted in the core, the central core (10) being formed by a main matrix and containing nanoparticles (5) doped with a rare earth, **characterized in that** the concentration by weight of the rare earth dopants in each nanoparticle is comprised between 1 and 20% by weight (wt.%), and **in that** the concentration of the nanoparticles in the main matrix of the central core is comprised between 0.05% and 1% by volume.

2. The use of claim 1, in which the concentration of the nanoparticles in the main matrix of the central core is comprised between 0.05% and 0.2% by volume.

3. The use of claim 1 or 2, in which the concentration of the nanoparticles in the main matrix of the central core is greater than 10¹⁷ NPs/cm³ for nanoparticles 5 nm in diameter.

4. The use of claim 1 or 2, in which the concentration of the nanoparticles in the main matrix of the central core is greater than 10¹⁶ NPs/cm³, for nanoparticles 10 nm in diameter.

5. The use of one of the previous claims, in which the nanoparticle matrix is based on alumina (Al₂O₃).

6. The use of one of the previous claims, in which the main matrix of the central core is based on silica.

7. The use of one of the previous claims, in which the nanoparticle matrix comprises phosphorus (P).

8. The use of one of the previous claims, in which the rare earth element is chosen from erbium (Er), ytterbium (Yb), thulium (Tm) or a combination thereof.

9. The use of at least one portion of an optical fibre (150) in an optical amplifier, the gain of the amplifier being greater than or equal to 20 dB for a length of fibre comprised between 1 m and 3 m, wherein said optical fibre (150) comprises a central core (10) suitable for transmitting and amplifying and optical signal, and an optical cladding (11) surrounding the central core and suitable for confining the optical signal transmitted in the core, the central core (10) being formed by a main matrix and containing nanoparticles (5) doped with a rare earth, **characterized in that** the concentration by weight of the rare earth dopants in each nanoparticle is comprised between 1 and 20% by weight (wt.%), and **in that** the concentration of the nanoparticles in the main matrix of the central core is comprised between 0.05% and 1% by volume.

## Patentansprüche

1. Verwendung wenigstens eines Teils eines Lichtwellenleiters (150) in einem Laser, wobei die optische Leistung des Impulslasers größer oder gleich 10 W ist für einen Impuls, der 100 ns beträgt, wobei der Lichtwellenleiter (150) einen zum Übertragen und Verstärken eines optischen Signals geeigneten zentralen Kern (10) sowie einen optischen Mantel (11) umfasst, der den zentralen Kern umgibt und dazu geeignet ist, das übertragene optische Signal auf den zentralen Kern zu begrenzen, wobei der zentrale Kern (10) von einer Hauptmatrix gebildet wird und mit Seltenen Erden dotierte Nanopartikel (5) aufweist, **dadurch gekennzeichnet, dass** der Massenanteil der Dotierstoffe aus Seltenen Erden in jedem Nanopartikel zwischen 1 und 20 Gewichtsprozent (Gew.-%) umfasst, und dass die Konzentration der Nanopartikel in der Hauptmatrix des zentralen Kerns zwischen 0,05 und 1 Volumenprozent umfasst.

2. Verwendung nach Anspruch 1, wobei die Konzentration der Nanopartikel in der Hauptmatrix des zentralen Kerns zwischen 0,05 und 0,2 Volumenprozent umfasst.

3. Verwendung nach Anspruch 1 oder 2, wobei die Konzentration der Nanopartikel in der Hauptmatrix des zentralen Kerns größer als 10¹⁷ NP/cm³ für Nanopartikel mit einem Durchmesser von 5 nm ist.

4. Verwendung nach Anspruch 1 oder 2, wobei die Konzentration der Nanopartikel in der Hauptmatrix des zentralen Kerns größer als 10¹⁶ NP/cm³ für Nanopartikel mit einem Durchmesser von 10 nm ist.

5. Verwendung nach einem der vorhergehenden Ansprüche, wobei die Nanopartikelmatrix auf Aluminiumoxid (Al₂O₃) basiert.

6. Verwendung nach einem der vorhergehenden Ansprüche, wobei die Hauptmatrix des zentralen Kerns auf Siliciumdioxid basiert.

7. Verwendung nach einem der vorhergehenden Ansprüche, wobei die Nanopartikelmatrix Phosphor (P) umfasst.

8. Verwendung nach einem der vorhergehenden Ansprüche, wobei die Seltene Erde aus der Gruppe Erbium (Er), Ytterbium (Yb), Thulium (Tm) oder einer Kombination davon ausgewählt wird.

9. Verwendung wenigstens eines Teils eines Lichtwellenleiters (150) in einem optischen Verstärker, wobei die Verstärkung des Verstärkers für eine Faser mit einer Länge zwischen 1 m und 3 m größer oder gleich 20 dB ist, wobei der Lichtwellenleiter (150) einen zum Übertragen und Verstärken eines optischen Signals geeigneten zentralen Kern (10) sowie einen optischen Mantel (11) umfasst, der den zentralen Kern umgibt und dazu geeignet ist, das übertragene Signal auf den zentralen Kern zu begrenzen, wobei der zentrale Kern (10) von einer Hauptmatrix gebildet wird und mit Seltenen Erden dotierte Nanopartikel (5) aufweist, **dadurch gekennzeichnet, dass** der Massenanteil der Dotierstoffe aus Seltenen Erden in jedem Nanopartikel zwischen 1 und 20 Gewichtsprozent (Gew.-%) umfasst, und dass die Konzentration der Nanopartikel in der Hauptmatrix des zentralen Kerns zwischen 0,05 und 1 Volumenprozent umfasst.

## Revendications

1. Utilisation d'au moins une portion d'une fibre optique (150) dans un laser, la puissance optique du laser pulsé étant supérieure ou égale à 10 W pour un pulse de 100 ns, dans laquelle ladite fibre optique (150) comprend un coeur central (10) approprié pour transmettre et amplifier un signal optique, et une gaine optique (11) entourant le coeur central et approprié pour confiner le signal optique transmis dans le coeur, le coeur central (10) étant formé par une matrice principale et contenant des nanoparticules (5) dopées avec une terre rare, **caractérisée en ce que** la concentration en poids des dopants de terre rare dans chaque nanoparticule est comprise entre 1 et 20 % en poids, et **en ce que** la concentration des nanoparticules dans la matrice principale du coeur central est comprise entre 0,05 % et 1 % en volume.

2. Utilisation selon la revendication 1, dans laquelle la concentration des nanoparticules dans la matrice principale du coeur central est comprise entre 0,05 % et 0,2 % en volume.

3. Utilisation selon la revendication 1 ou 2, dans laquelle la concentration des nanoparticules dans la matrice principale du coeur central est supérieure à 10¹⁷ NPs/cm³ pour les nanoparticules de 5 nm de diamètre.

4. Utilisation selon la revendication 1 ou 2, dans laquelle la concentration des nanoparticules dans la matrice principale du coeur central est supérieure à 10¹⁶ NPs/cm³, pour les nanoparticules de 10 nm de diamètre.

5. Utilisation selon l'une des revendications précédentes, dans laquelle la matrice de nanoparticules est à base d' alumine (Al₂O₃).

6. Utilisation selon l'une des revendications précédentes, dans laquelle la matrice principale du coeur central est à base de silice.

7. Utilisation selon l'une des revendications précédentes, dans laquelle la matrice de nanoparticules comprend du phosphore (P).

8. Utilisation selon l'une des revendications précédentes, dans laquelle l'élément de terre rare est choisi parmi l'erbium (Er), l'ytterbium (Yb), le thulium (Tm) ou une combinaison de ceux-ci.

9. Utilisation d'au moins une portion d'une fibre optique (150) dans un amplificateur optique, le gain de l'amplificateur étant supérieur ou égal à 20 dB pour une longueur de fibre comprise entre 1 m et 3 m, dans laquelle ladite fibre optique (150) comprend un coeur central (10) approprié pour transmettre et amplifier un signal optique, et une gaine optique (11) entourant le coeur central et approprié pour confiner le signal optique transmis dans le coeur, le coeur central (10) étant formé par une matrice principale et contenant des nanoparticules (5) dopées avec une terre rare, **caractérisée en ce que** la concentration en poids des dopants de terre rare dans chaque nanoparticule est comprise entre 1 et 20 % en poids, et **en ce que** la concentration des nanoparticules dans la matrice principale du coeur central est comprise entre 0,05 % et 1 % en volume.
